(19) Europäisches Patentamt
European Patent Office
Office européen des brevets

(11) **EP 4 235 617 A1**

(12) **EUROPEAN PATENT APPLICATION**
published in accordance with Art. 153(4) EPC

(43) Date of publication:
**30.08.2023 Bulletin 2023/35**

(51) International Patent Classification (IPC):
***G08G 1/01*** *(2006.01)*

(21) Application number: **22738907.9**

(86) International application number:
**PCT/CN2022/070351**

(22) Date of filing: **05.01.2022**

(87) International publication number:
**WO 2022/152026 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.01.2021 CN 202110032765**

(71) Applicants:
- **ZTE Corporation**
  **Shenzhen, Guangdong 518057 (CN)**
- **Chang'an University**
  **Xi'an, Shaanxi 710064 (CN)**

(72) Inventors:
- **YU, Hongquan**
  **Shenzhen, Guangdong 518057 (CN)**
- **AN, Yisheng**
  **Shenzhen, Guangdong 518057 (CN)**
- **HUANG, Wei**
  **Shenzhen, Guangdong 518057 (CN)**
- **LIU, Mingfeng**
  **Shenzhen, Guangdong 518057 (CN)**
- **GUO, Hongxing**
  **Shenzhen, Guangdong 518057 (CN)**
- **WANG, Chao**
  **Shenzhen, Guangdong 518057 (CN)**
- **ZHAO, Zhenxing**
  **Shenzhen, Guangdong 518057 (CN)**
- **ZHU, Chenxing**
  **Shenzhen, Guangdong 518057 (CN)**
- **YANG, Zhiqiang**
  **Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **TRAFFIC CONGESTION DETECTION METHOD AND APPARATUS, ELECTRONIC DEVICE AND STORAGE MEDIUM**

(57) A traffic congestion detection method and apparatus, an electronic device and a storage medium. The traffic congestion detection method is applied to a roadside unit (RSU), and comprises: acquiring vehicle information of vehicles (Vi) driving into a detection region of the RSU; calculating a first congestion index according to the vehicle information, wherein the first congestion index is used to represent traffic congestion conditions in the detection region of the RSU; acquiring a plurality of first congestion indices of RSUs in a target region, wherein the target region comprises detection regions of a plurality of RSUs; and calculating a second congestion index according to the plurality of first congestion indices, wherein the second congestion index is used to represent traffic congestion conditions of the target region.

FIG. 1

EP 4 235 617 A1

**Description**

CROSS-REFERENCE TO RELATED APPLICATIONS

The present application claims the priority of Chinese Patent Application No. 202110032765.3, filed on January 12, 2021, the contents of which are incorporated herein in their entirety by reference.

TECHNICAL FIELD

Embodiments of the present application relate to the field of communication technologies, and in particular, to a traffic congestion detection method, a traffic congestion detection apparatus, an electronic device and a storage medium.

BACKGROUND

With development of communication technologies, a vehicle networking technology has gradually been widely applied. The vehicle networking technology includes: interconnection and intercommunication of Vehicle to Vehicle (V2V), Vehicle to Infrastructure (V2I), Vehicle to People (V2P), Vehicle to Center (V2C) and the like, implements communication and roaming between a vehicle ad hoc network and various heterogeneous networks, ensures real-time and serviceability in terms of functions and performances, and further implements vehicle motion control, thereby implementing technologies of vehicle motion control, control of traffic signals and traffic information processing. V2V refers to interconnection and intercommunication among traffic participants, and V21 refers to interconnection and intercommunication between the traffic participants and traffic infrastructure. In recent years, traffic congestion becomes a common problem in large cities, and the V2V technology is generally used to collect traffic data to detect a traffic congestion condition.

However, in an actual traffic congestion detection scene, numerous vehicles are in an actual road network, resulting in a total amount of communications among the traffic participants being too great, and further part of information may be expected to be transmitted among multiple ones of the traffic participants, so that reliability and stability of an information transmission process cannot be well guaranteed, and efficiency and accuracy of traffic congestion detection are finally affected.

SUMMARY

An embodiment of the present application provides a traffic congestion detection method, applied to a roadside unit (RSU), including: acquiring vehicle information of each vehicle driving into a detection region of the RSU; calculating a first congestion index according to the vehicle information, the first congestion index representing a traffic congestion condition in the detection region of the RSU; acquiring a plurality of first congestion indexes of RSUs in a target region, the target region including a plurality of detection regions of the RSUs; and calculating a second congestion index according to the plurality of first congestion indexes, the second congestion index representing a traffic congestion condition of the target region.

An embodiment of the present application provides a traffic congestion detection apparatus, including: a first acquisition module configured to acquire vehicle information of each vehicle driving into a detection region of a roadside unit (RSU); a first calculation module configured to calculate a first congestion index according to the vehicle information, the first congestion index representing a traffic congestion condition in the detection region of the RSU; a second acquisition module configured to acquire a plurality of first congestion indexes of RSUs in a target region, the target region including a plurality of detection regions of the RSUs; and a second calculation module configured to calculate a second congestion index according to the plurality of first congestion indexes, the second congestion index representing a traffic congestion condition of the target region.

An embodiment of the present application provides an electronic device, including: at least one processor; and a memory communicatively connected with the at least one processor; the memory stores instructions to be executed by the at least one processor, the instructions, executed by the at least one processor, cause the at least one processor to perform the method described above.

An embodiment of the present application provides a computer-readable storage medium storing a computer program thereon, the computer program, executed by a processor, causes the processor to perform the method described above.

BRIEF DESCRIPTION OF DRAWINGS

Fig. 1 is a flowchart illustrating a traffic congestion detection method in a first embodiment according to the present application;

Fig. 2 is a schematic diagram of a road network structure in an application scene of the traffic congestion detection method in the first embodiment according to the present application;

Fig. 3 is a flowchart of calculating a first congestion index in a second embodiment according to the present application;

Fig. 4 is a function image of a membership function of an average speed on a road section in the second embodiment according to the present application;

Fig. 5 is a function image of a membership function of an average density on a road section in the second embodiment according to the present application;

Fig. 6 is a flowchart of calculating a second congestion index in the second embodiment according to the present application;

Fig. 7 is a flowchart illustrating a traffic congestion detection method in a third embodiment according to the present application;

Fig. 8 is a schematic structural diagram of a traffic congestion detection apparatus in a fourth embodiment according to the present application; and

Fig. 9 is a schematic structural diagram of an electronic device in a fifth embodiment according to the present application.

## DETAILED DESCRIPTION

In order to make purposes, technical solutions, and advantages of embodiments of the present application clearer, the embodiments of the present application are described below with reference to the accompanying drawings. It should be understood by those of ordinary skill in the art that, in the embodiments of the present application, many technical details are proposed to enable readers to better understand the present application. However, the technical solutions claimed in the present application may be implemented without these technical details and various changes and modifications based on the following embodiments. The following embodiments are divided for convenience of description, and should not limit the present application, and the embodiments of the present application may be combined and quoted with each other if no conflict is incurred.

A main purpose of embodiments of the present application is to provide a traffic congestion detection method, a traffic congestion detection apparatus, an electronic device and a storage medium, so that efficiency and stability of calculation of traffic data are improved, and reliability of a result of detecting a traffic congestion condition is improved.

According to the traffic congestion detection method provided in the present application, based on a vehicle networking mode of V2I, vehicle information in each detection region is acquired by a RSU, after a congestion index in each detection region is calculated and uploaded, and then a congestion index in a target region is calculated according to congestion indexes calculated by RSUs in the target region, so as to evaluate a traffic congestion condition of the target region, which does not depend on information transmission between traffic participants, so that a stable and reliable traffic congestion detection result can be obtained.

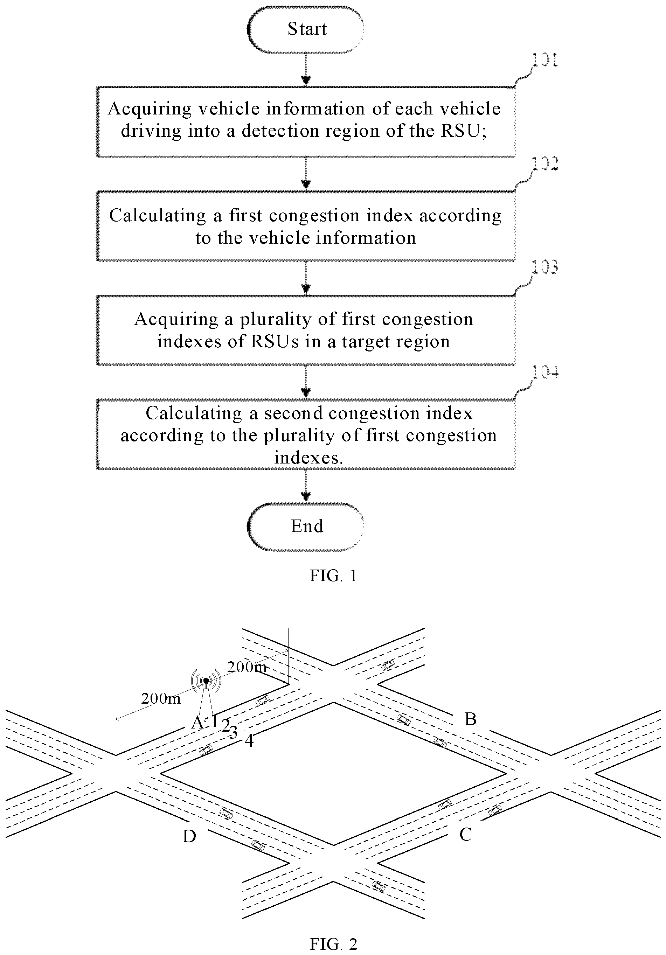

A first embodiment of the present application relates to a traffic congestion detection method, and a specific flow of the method is shown in Fig. 1, as shown in Fig. 1, the method includes: acquiring vehicle information of each vehicle driving into a detection region of a RSU; calculating a first congestion index according to the vehicle information, the first congestion index representing a traffic congestion condition in the detection region of the RSU; acquiring a plurality of first congestion indexes of RSUs in a target region, the target region including a plurality of detection regions of the RSUs; and calculating a second congestion index according to the plurality of first congestion indexes, the second congestion index representing a traffic congestion condition of the target region. The congestion index in the target region is calculated according to the congestion indexes calculated by the RSUs in the target region, so as to evaluate the traffic congestion condition of the target region, which does not depend on information transmission between traffic participants, so that a stable and reliable traffic congestion detection result can be obtained.

Implementation details of the traffic congestion detection method provided in the embodiment of the present application are described in detail below, and the following description is only provided for facilitating understanding of the implementation details, but the implementation details are not necessary for implementing the method.

An execution body of the traffic congestion detection method in the embodiment is a roadside unit (RSU) installed on a roadside and communicating with an on-board equipment, i.e., an on-board unit (OBU), installed on a vehicle driving on the road, so as to implement a function of vehicle information interaction. The specific flow of the traffic congestion detection method in the embodiment is as shown in Fig. 1, and includes operations 101 to 104.

At operation 101, acquiring vehicle information of each vehicle driving into a detection region of a RSU.

Specifically, in the embodiment, a target region including a plurality of road sections is used as an object of traffic congestion detection (i.e., an object to be detected for a traffic congestion condition thereof), the road sections in the target region are fully covered by detection regions of at least one RSU, and according to characteristics of a communication between each RSU and an OBU, a distance between any two RSUs is set to be no greater than two hundred meters. After deploying each RSU, the RSU establishes a communication connection with the OBU on the road section in the detection region of the RSU, so that traffic congestion detection is started, and vehicle information reported by the OBU is periodically acquired.

In some examples, the vehicle information mainly includes speed information and a current location, the speed information may specifically include instantaneous speeds of a vehicle to which the OBU belongs. The RSU stores all vehicle information in a period for a subsequent calculation of congestion indexes.

In an actual application scenario, in a vehicle networking communication process, the RSU on each road section collects messages sent by the OBU, the RSU accesses into a core wireless network through communication modes such as broadband wireless, a mobile base station, a satellite, and the like, and the core wireless network accesses into Internet to communicate with an intelligent traffic system.

At operation 102, calculating a first congestion index according to the vehicle information.

Specifically, the RSU firstly determines the road section covered by the detection region according to pre-recorded traffic network data, then according to the speed information and location information of each vehicle, determines an average speed and an average density on the road section covered by the detection region of the RSU, and determines the first congestion index according to the average speed and the average density on the road section. That is, preliminary processing is performed on the vehicle information, an average speed and an average density of a certain road section in the detection region are calculated based on the speed information and the location information of the vehicle, and then the first congestion index is determined based on the average speed and the average density on the road section.

The average speed on the road section is calculated according to instantaneous speeds uploaded by the OBU, the average density on the road section is obtained by determining, by the RSU, the road section where the vehicle is located according to the location information uploaded by the OBU, and then counting a number of vehicles on the road section.

In some examples, a road network structure in the target region is as shown in Fig. 2, after the vehicle drives into the detection region, the vehicle reports speed information and location information of the vehicle to the RSU of the road section every second through the OBU. Assuming that an average speed of the vehicle on an urban road is about 40km/h, a time duration for passing through the detection region of the RSU (with a radius of two hundred meters of the detection region being illustrated as an example) is about thirty-six seconds, if the average speed of the vehicle in a time period is calculated according to instantaneous speeds of the vehicle, a number of data samples of instantaneous speeds should not too few, the more the number of data samples is, the longer the time period is expected to be, errors such as transmission delays and the like may be ignored in calculation, by taking the time duration in which the vehicle passes through the detection region as a period of the RSU for calculating the congestion index of the detection region, the shorter the period of the RSU for calculating the congestion index of the detection region is, the higher the efficiency of the RSU is, assuming that the period of the RSU for calculating the congestion index of the detection region is set to be thirty seconds, the RSU calculates to obtain one congestion index of the region every thirty seconds.

In some examples, assuming that within 30 seconds, a vehicle $V_i$ reports t ($t \leq 30$) sets of data to the RSU, a process of calculating an average speed $v_{ave}$ on a road section includes operation S11 to S13.

At operation S11, assuming there are currently $t'$ ($t' \leq 30$) effective speeds, according to j instantaneous speeds of the vehicle $V_i$, calculating an average speed $v_i$ of the vehicle $V_i$ within one period, a calculation formula is as follows:

$$v_i = \frac{\sum_{j=1}^{t'} v_i^j}{t'} \quad (i = 1, 2, 3 \ldots n).$$

At operation S12, calculating, by the RSU, an average speed $v_r$ of a lane $r$ within one period, a calculation formula is as follows:

$$v_r = \frac{\sum_{i=1}^{n_r} v_i}{n_r}$$

, where $n_r$ represents a number of vehicles on the lane r , and $n = \sum n_r$.

At operation S13, calculating, by the RSU, an average speed $v_{ave}$ of a certain road section within one period, a calculation formula is as follows:

$$v_{ave} = \frac{\sum v_r}{s_r}$$

, where $s_r$ represents a total number of lanes in the road section, for example, $s_r = 4$.

A process of calculating an average density $\rho_{ave}$ on a road section includes operation S21 to S23.

At operation S21, calculating, by the RSU, a density $\rho_r^t$ of vehicles of the lane r in t-th second, a calculation formula is as follows: $\rho_r^t = \dfrac{n_r}{l}$ , where $l$ is a total length of the lane r occupied by vehicles in the t-th second, i.e., a distance between two vehicles closest to two ends of the detection region of the RSU, including lengths of the two vehicles.

At operation S22, calculating, by the RSU, an average density $\rho_r$ of the lane r within one period, a calculation formula is as follows: $\rho_r = \dfrac{\sum_{t=1}^{30} \rho_r^t}{30}$ .

At operation S23, calculating, by the RSU, the average density $\rho_{ave}$ of a certain road section within one period, a calculation formula is as follows: $\rho_{ave} = \dfrac{\sum \rho_r}{s_r}$ .

In some examples, during calculating the first congestion index (i.e., the congestion index determined according to the average speed and the average density on the road section), different weight coefficients may be assigned to different road sections according to the road network structure, for example, a higher weight is assigned to a main road and a lower weight is assigned to an auxiliary road, so as to evaluate the congestion condition of all road sections in the region more accurately.

At operation 103, acquiring a plurality of first congestion indexes uploaded by RSUs in a target region.

Specifically, in the embodiment, the congestion condition of the target region is taken as an object of traffic congestion detection, the target region includes a plurality of detection regions of RSUs, i.e., a plurality of road sections are covered in the target region, and the intelligent traffic system performs statistics simultaneously on first congestion indexes calculated and uploaded by the RSUs, and analyzes the first congestion indexes according to the road network structure, determines a data fusion center, and calculates a second congestion index. Generally, the RSU located at a center of a main road section, i.e., a road section having a largest traffic flow, is used as a data fusion center. For example, the RSU performing the above operations 101 and 102 being determined as the data fusion center is taken as an example, the first congestion indexes reported by other RSUs in the target region are acquired through the intelligent traffic system.

At operation 104, calculating a second congestion index according to the plurality of first congestion indexes.

Specifically, after the RSU determined as the data fusion center acquires the first congestion indexes reported by the RSUs in the target region, the RSU performs a statistic calculation on all the first congestion indexes. Since the first congestion index is a parameter indicating a congestion condition of a single detection region of the RSU, so that congestion conditions of a plurality of detection regions are statistically analyzed, a congestion condition of the target region composed of the plurality of detection regions can be obtained. In the embodiment, the congestion condition of the target region is represented by the second congestion index.

In the traffic congestion detection method provided in the embodiment, vehicle information in each detection region is acquired by the RSU, after the congestion index in each detection region is calculated and uploaded, and then the congestion index in the target region is calculated according to the congestion indexes calculated by the RSUs in the target region, so as to evaluate a traffic congestion condition of the target region, so that a stable and reliable traffic congestion detection result can be obtained.

It should be noted that the above examples in the embodiment are only for understanding the embodiment of the present application, but do not limit the embodiment of the present application.

A second embodiment of the present application relates to a traffic congestion detection method being substantially same as that in the first embodiment, with a main difference in that: in the second embodiment, the first congestion index and the second congestion index are calculated based on a DS evidence theory and a fuzzy set theory.

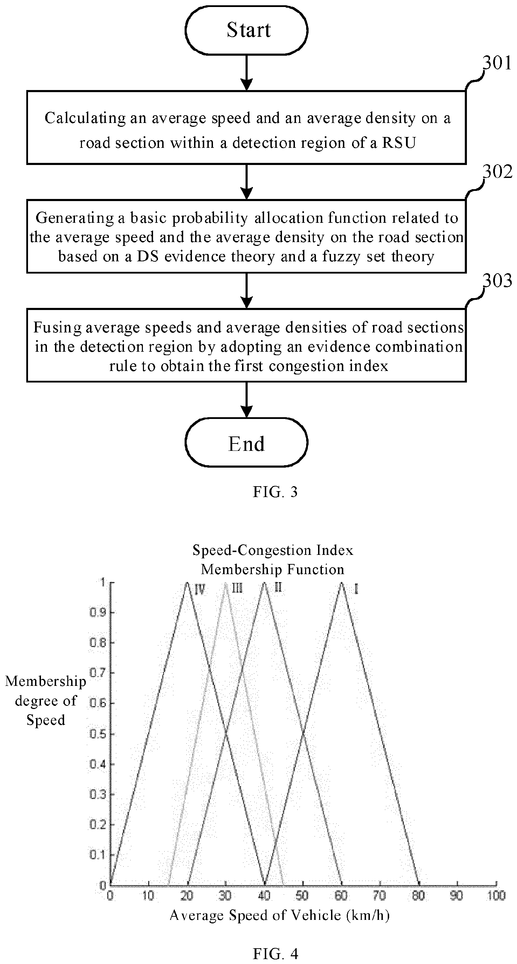

Implementation details of the traffic congestion detection method provided in the second embodiment are described in detail below, and a process of calculating the first congestion index in the traffic congestion detection method provided in the second embodiment is as shown in Fig.3, and includes operations 301 to 303.

At operation 301, calculating an average speed and an average density on a road section within a detection region of a RSU.

Specifically, in the embodiment, the average speed and the average density on the road section may be determined by using the calculation mode in the first embodiment, thus not be repeated herein.

In an example, the average speed on the road section may be calculated and obtained according to a time duration t for a vehicle passing through the RSU and a distance d of the road section covered by the RSU, i.e., $v_{ave} = d/t$. This calculation mode can prevent acceleration or deceleration caused by special circumstances during the vehicle driving from resulting in that samples of instantaneous speeds uploaded by the vehicle cannot accurately represent an actual condition of the road section.

At operation 302, generating a basic probability allocation function related to the average speed and the average density on the road section based on a DS evidence theory and a fuzzy set theory.

Specifically, after calculating and obtaining $v_{ave}$ and $\rho_{ave}$, based on the DS evidence theory and the fuzzy set theory, the average speed and average density on the road section are respectively matched with corresponding membership functions, so as to generate two sets of basic probability allocation (BPA) functions related to speed and density attributes, which are respectively recorded as $m_v$, $m_\rho$. An identification framework composed of congestion indexes is set as $\Theta$, assuming that G is a certain proposition under the identification framework, $\mu_G(x)$ is a membership function of the proposition G, represents a degree of the attribute x belongs to the proposition G, and two attribute eigenvalues obtained from the above operations for determining the congestion index of the road section are matched respectively: the average speed and the average density on the road section are respectively matched with corresponding membership functions, so as to generate two sets of the BPA functions related to speed and density attributes, which are respectively recorded as $m_v$, $m_\rho$. A matching degree between the speed attribute and the proposition G is defined as: $m_v(G) = \mu_G(x)|_{x=v_{ave}}$, a matching degree between the density attribute and the proposition G is defined as: $m_\rho(G) = \mu_G(x)|_{x=\rho_{ave}}$, G may represent a single subset proposition or a multi-subset proposition. If a sum of reliability values of a generated BPA function is greater than 1, normalization processing is performed on the sum of reliability values; if the sum is less than 1, redundant reliability values are assigned to a full set, i.e. to unknowns.

A congestion index set is $\Theta=\{$ I , II ,III,IV $\}$.

The congestion index I indicates an unobstructed state, and a qualitative description of citizen perception is that vehicles on the road are few and pass unhindered; the congestion index II indicates a basic unobstructed state, and the qualitative description of citizen perception is that vehicles pass basically unobstructed; the congestion index III indicates a light congestion state, and the qualitative description of citizen perception is that congestion occurs, but is not severe; the congestion index IV indicates moderate congestion, and the qualitative description of citizen perception is that the congestion is severe.

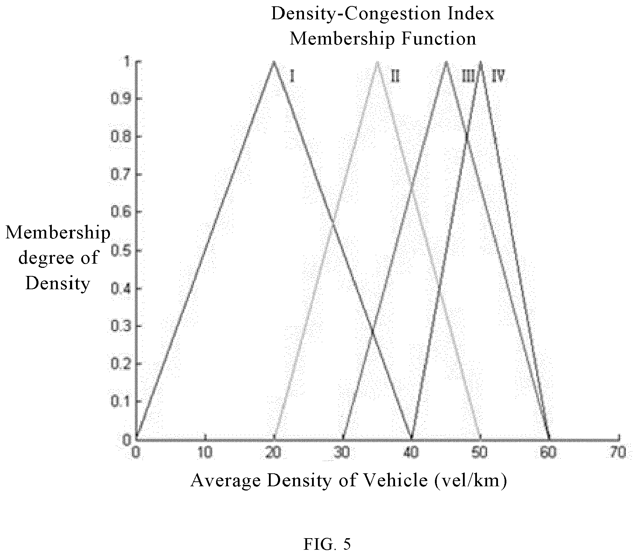

In the embodiment, the membership functions are as shown in Fig. 4 and Fig.5. In the embodiment, it is assumed that an average speed $v_A = 43km / h$ on a road section A and an average density $\rho_A = 22veh / km$ on the road section A are detected.

According to functions respectively corresponding to the speed $v_A$ and the density $\rho_A$, as shown in Fig. 4, the speed $v_A = 43km / h$ intersects with functions with congestion indexes I, 11, and III; as shown in Fig. 5, the density $\rho_A = 22veh / km$ intersects with functions with congestion indexes I and 11. As shown in Fig. 4, it can be seen that, from bottom to top, an intersection value between $v_A = 43km / h$ and III is 0.1333, which is a reliability degree for a multi-subset proposition {I, II, III}, an intersection value between $v_A = 43km / h$ and I is 0.15, which is a reliability degree for a multi-subset proposition {I, II}, and an intersection value between $v_A = 43km / h$ and II is 0.85, which is a reliability degree for a single-subset proposition II, similarly, from bottom to top, an intersection value between $\rho_A = 22veh / km$ and II is 0.1334, which is a reliability degree for a multi-subset proposition {I, II}, an intersection value between $\rho_A = 22veh / km$ and I is 0.9, which is a reliability degree for a single-subset proposition I. The normalization processing is performed on $v_A$ and $\rho_A$ to obtain basic probability allocation (BPA) functions for congestion indexes under two attributes of speed and density in the road section A are as follows:

$$m_{v_A}(\text{II}) = 0.75 \quad , \quad m_{v_A}(\text{I},\text{II}) = 0.1324 \quad , \quad m_{v_A}(\text{I},\text{II},\text{III}) = 0.1176 \quad , \quad m_{\rho_A}(\text{I}) = 0.8709 \quad ,$$

$$m_{\rho_A}(\text{I},\text{II}) = 0.1291 .$$

At operation S303, fusing average speeds and average densities of road sections in the detection region by adopting an evidence combination rule to obtain the first congestion index.

Specifically, assuming that the detection region includes x road sections, the average speeds and average densities of the x road sections are fused to obtain the basic probability allocation function $m_A$ of the congestion index for the road section A. A basic probability allocation function corresponding to a congestion index of a road section i is denoted as $m_i$, i=1,2,...,x. A specific Dempster combination rule is as follows:

$$\begin{cases} k = \sum_{A \cap B = \varnothing} m_v(A) \times m_\rho(B) \\ m(A') = \dfrac{1}{1-k} \sum_{A \cap B = A'} m_v(A) \times m_\rho(B) \end{cases} .$$

In some examples, a process of calculating $m_A$ is as follow:

$$k = \sum_{A \cap B = \varnothing} m_{v_A}(A) \times m_{\rho_A}(B)$$
$$= m_{v_A}(\mathrm{II}) \times m_{\rho_A}(\mathrm{I})$$
$$= 0.75 \times 0.8709$$
$$= 0.6532 \quad ,$$

$$m_A(\mathrm{I}) = \frac{1}{1-k} \sum_{A \cap B = \{\mathrm{I}\}} m_{v_A}(A) \times m_{\rho_A}(B)$$
$$= \frac{1}{1-0.6532} \times \left\{ m_{v_A}(\mathrm{I},\mathrm{II}) \times m_{\rho_A}(\mathrm{I}) + m_{v_A}(\mathrm{I},\mathrm{II},\mathrm{III}) \times m_{\rho_A}(\mathrm{I}) \right\}$$
$$= 2.8835 \times (0.1324 \times 0.8709 + 0.1176 \times 0.1219)$$
$$= 0.3763 \quad ,$$

$$m_A(\mathrm{II}) = \frac{1}{1-k} \sum_{A \cap B = \{\mathrm{II}\}} m_{v_A}(A) \times m_{\rho_A}(B)$$
$$= \frac{1}{1-0.6532} \times \left\{ m_{v_A}(\mathrm{II}) \times m_{\rho_A}(\mathrm{I},\mathrm{II}) \right\}$$
$$= 2.8835 \times (0.75 \times 0.1219)$$
$$= 0.2792 \quad ,$$

$$m_A(\mathrm{I},\mathrm{II}) = \frac{1}{1-k} \sum_{A \cap B = \{\mathrm{I},\mathrm{II}\}} m_{v_A}(A) \times m_{\rho_A}(B)$$
$$= \frac{1}{1-0.6532} \times \left\{ m_{v_A}(\mathrm{I},\mathrm{II}) \times m_{\rho_A}(\mathrm{I},\mathrm{II}) + m_{v_A}(\mathrm{I},\mathrm{II},\mathrm{III}) \times m_{\rho_A}(\mathrm{I},\mathrm{II}) \right\}$$
$$= 2.8835 \times (0.1324 \times 0.1219 + 0.1176 \times 0.1219)$$
$$= 0.0931 \quad ,$$

$$m_A(\theta) = \frac{1 - \{\mathrm{I}\} - \{\mathrm{II}\} - \{\mathrm{I},\mathrm{II}\}}{2^4 - 3}$$
$$= \frac{1 - 0.3763 - 0.2792 - 0.0931}{13} \quad .$$
$$= 0.0193$$

During a detection period, if RSUs of four road sections A, B, C, and D detect that driving speeds and traffic densities on the road sections A, B, C, and D respectively are (43km/h, 22veh/km), (45km/h, 19veh/km), (40km/h, 25veh/km), and (38km/h, 28veh/km), sets of congestion indexes of the four road sections in the region are: $\{m_A(\mathrm{I}) = 0.3763, m_A(\mathrm{II}) = 0.2792, m_A(\mathrm{I},\mathrm{II}) = 0.0931, m_A(\theta) = 0.0193\}$, $\{m_B(\mathrm{I}) = 0.8261, m_B(\theta) = 0.0116\}$, $\{m_C(\mathrm{II}) = 0.7618, m_C(\theta) = 0.0159\}$, $\{m_D(\mathrm{II}) = 1\}$.

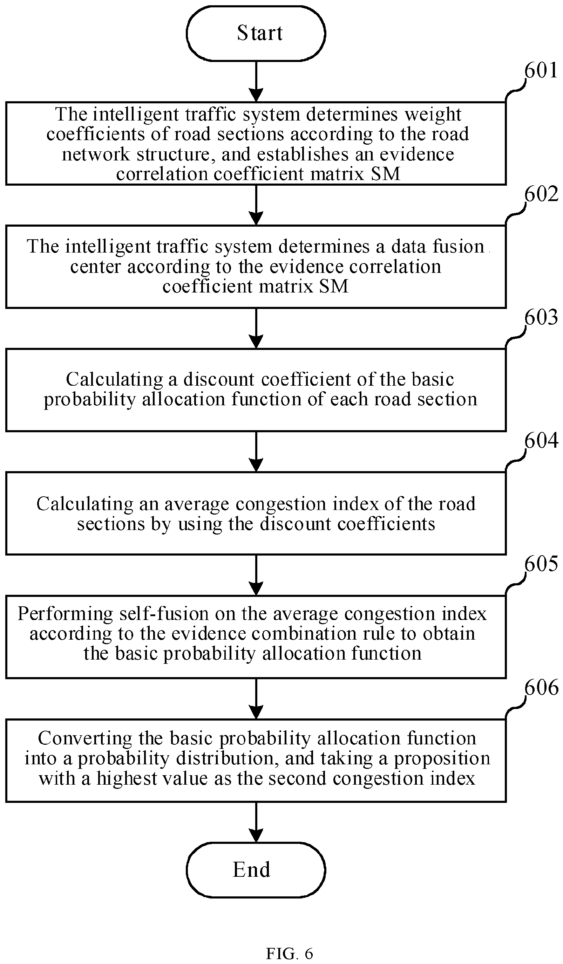

A process of calculating the second congestion index in the traffic congestion detection method provided in the embodiment is as shown in Fig. 6, and includes operation 601 to 606.

At operation 601, the intelligent traffic system determines weight coefficients of road sections according to the road network structure, and establishes an evidence correlation coefficient matrix SM.

At operation 602, the intelligent traffic system determines a data fusion center according to the evidence correlation coefficient matrix SM.

Specifically, the weight coefficients of the road sections in the target region are acquired; the weight coefficient of the main road is higher than that of each auxiliary road; a correlation coefficient matrix is established according to the weight coefficients of the road sections; a value of an element in the matrix represents a degree that the road section represented by a row where the element is located is supported by the road section represented by a column where the element is located, and a sum of values of all elements of each row in the matrix represents a central location of the road section corresponding to the row in the target region; the RSU on the road section corresponding to the row with a highest sum of values of all elements is selected as the data fusion center.

For example, assuming that the target region has s road sections, and the SM is an s-order symmetric matrix, and a value in i-th row and j-th column of the matrix SM reflect a similarity degree between $m_i$ and $m_j$, and is denoted as SM(i, j). $\max_{i=1,2,\ldots,s}\left\{\sum_{j=1}^{s} SM(i,j)\right\}$ reflects that a traffic density on the road section i is higher than that of other road sections, and in such case, after receiving the first congestion index uploaded by each RSU, the intelligent traffic system selects the RSU on the road section i as the data fusion center from a region P where the congestion index is to be determined, other RSUs in the region P each send the basic probability allocation function of the corresponding road section to the RSU serving as the data fusion center.

In some examples, the road network structure is as shown in Fig. 2, a road section A is a main road, road sections B, C and D are auxiliary roads, therefore a following evidence correlation matrix SM is designed.

$$SM = \begin{pmatrix} 1 & 0.9941 & 0.9446 & 0.5857 \\ 0.9941 & 1 & 0.5608 & 0.5874 \\ 0.9446 & 0.5608 & 1 & 0.5987 \\ 0.5857 & 0.5874 & 0.5987 & 1 \end{pmatrix}$$

According to $\max_{i=1,2,\ldots,s}\left\{\sum_{j=1}^{s} SM(i,j)\right\}$, the road section A is selected as an auxiliary fusion center, and the RSUs on road sections B, C, and D send respective values $m_B$, $m_c$, $m_D$ to the RSU on the road section A.

At operation 603, calculating a discount coefficient of the basic probability allocation function of each road section.

Specifically, the discount coefficient $Crd_i$ reflects a degree that a congestion index of the road section i is supported by congestion indexes of other road sections, and also serves as a weight for each road section during calculating the second congestion index. A formula of calculating the discount coefficient $Crd_i$ is as follows:

$$Crd_i = \frac{\sum_{j=1}^{s} SM(i,j) - 1}{\sum_{i=1}^{s}\sum_{j=1}^{s} SM(i,j) - s}.$$

In some examples, the road network structure as shown in Fig. 2 is taken as an example, discount coefficients corresponding to four road sections are as follows:

$$Crd_A = \frac{\sum_{i=1}^{4} SM(1,i) - 1}{\sum_{i=1}^{4} \sum_{i=1}^{4} SM(i,j) - 4}$$

$$= \frac{0.9941 + 0.9446 + 0.5857}{2 \times (0.9941 + 0.9446 + 0.5857 + 0.5608 + 0.5874 + 0.5987)}$$

$$= 0.2955$$ ,

$$Crd_B = \frac{\sum_{i=1}^{4} SM(2,i) - 1}{\sum_{i=1}^{4} \sum_{i=1}^{4} SM(i,j) - 4}$$

$$= \frac{0.9941 + 0.5608 + 0.5874}{2 \times (0.9941 + 0.9446 + 0.5857 + 0.5608 + 0.5874 + 0.5987)}$$

$$= 0.2508$$ ,

$$Crd_C = \frac{\sum_{i=1}^{4} SM(3,i) - 1}{\sum_{i=1}^{4} \sum_{i=1}^{4} SM(i,j) - 4}$$

$$= \frac{0.9446 + 0.5608 + 0.5987}{2 \times (0.9941 + 0.9446 + 0.5857 + 0.5608 + 0.5874 + 0.5987)}$$

$$= 0.2463$$ ,

$$Crd_D = \frac{\sum_{i=1}^{4} SM(4,i) - 1}{\sum_{i=1}^{4} \sum_{i=1}^{4} SM(i,j) - 4}$$

$$= \frac{0.5857 + 0.5874 + 0.5987}{2 \times (0.9941 + 0.9446 + 0.5857 + 0.5608 + 0.5874 + 0.5987)} \cdot$$

$$= 0.2074$$

At operation 604, calculating an average congestion index of the road sections by using the discount coefficients.

Specifically, evidences of a same proposition on different road sections are weighted and summed by using the discount coefficient $Crd_i$ to obtain a weighted average evidence $m_Q$. A calculating formula is as follows:

$$m_Q = \sum_{i=1}^{s} Crd_i \square m_i .$$

For example, a calculating process is as follows:

$$m_Q(\mathrm{I}) = \sum_{i=A}^{D} Crd_i \times m_i$$

$$= 0.2955 \times 0.3763 + 0.2508 \times 0.8261 + 0.2463 \times 0.0159 + 0$$

$$= 0.3223$$ ,

$$m_Q(\text{II}) = \sum_{i=A}^{D} Crd_i \times m_i$$

$$= 0.2792 \times 0.2955 + 0.01159 \times 0.2508 + 0.7618 \times 0.2463 + 1 \times 0.2074$$

$$= 0.4804$$

,

$$m_Q(\text{I,II}) = \sum_{i=A}^{D} Crd_i \times m_i$$

$$= 0.0931 \times 0.2955 + 0.2508 \times 0.01159 + 0.2463 \times 0.0159 + 0.2074 \times 0$$

$$= 0.0343$$

,

$$m_Q(\theta) = \sum_{i=A}^{D} Crd_i \times m_i$$

$$= 0.2955 \times 0.01934 + 0.2508 \times 0.01159 + 0.2463 \times 0.0159 + 0.2074 \times 0.$$

$$= 0.0125$$

At operation 605, performing self-fusion on the average congestion index according to the evidence combination rule to obtain the basic probability allocation function.

Specifically, the average evidence $m_Q$ is fused three times using the Dempster combination rule to obtain the basic probability allocation function $m_F$, i.e., $m_F = m_Q \oplus m_Q \oplus m_Q$.

Fusion results of fusions of the three times are shown in the table below.

| $m_Q$ | $m_Q(\text{I}) = 0.3223$ | $m_Q(\text{II}) = 0.4804$ | $m_Q(1,11) = 0.0343$ |
|---|---|---|---|
| $m_Q \oplus m_Q$ | $m_{Q'}(\text{I}) = 0.1826$ | $m_{Q'}(\text{II}) = 0.3821$ | $m_{Q'}(\text{I,II}) = 0.0017$ |
| $m_Q \oplus m_Q \oplus m_Q$ | $m_{Q''}(\text{I}) = 0.0833$ | $m_{Q''}(\text{II}) = 0.1975$ | $m_{Q''}(\text{I,II}) = 0.0001$ |
| $m_F$ | $m_F(\text{I}) = 0.0332$ | | $m_F(\text{II}) = 0.1135$ |

At operation 606, converting the basic probability allocation function $m_F$ into a probability distribution p, and taking a proposition with a highest value as the second congestion index.

Specifically, a basic principle of converting the basic probability allocation function $m_F$ into the probability distribution p is to maintain a reliability degree of a single-subset proposition and evenly allocate a reliability degree of a multi-subset proposition to single subset propositions contained in the multi-subset proposition. In the embodiment, each calculated probability is normalized, and the proposition with the highest value is taken as the congestion index of the region.

In some examples, p(I) = 0.0332,p(II) = 0.1135, and after being normalized, p(I) = 0.2263,p(II) = 0.7736, p(II) > p(I), therefore the congestion index of the region is determined as II, which indicates a basic unobstructed state, and the qualitative description of citizen perception is that vehicles pass basically unobstructed.

According to the traffic congestion detection method provided in the embodiment, the first congestion index and the second congestion index are calculated by way of data fusion based on the evidence theory, so that congestion conditions of each road section can be more accurately statistically analyzed, and a congestion index more accurately reflecting the actual traffic congestion condition is obtained.

A third embodiment of the present application relates to a traffic congestion detection method being substantially same as that in the first embodiment, with a main difference in that: in the third embodiment, after acquiring vehicle information periodically uploaded by each OBU in the detection region of the RSU, before calculating a first congestion index according to the vehicle information, the traffic congestion detection method further includes: counting instantaneous speed information in the vehicle information, screening the instantaneous speed information, and removing abnormal instantaneous speed information.

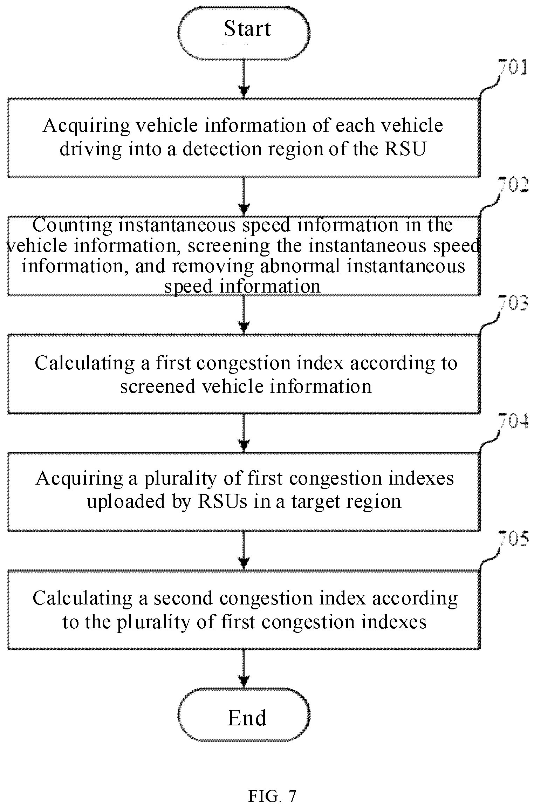

Implementation details of the traffic congestion detection method provided in the third embodiment are described in detail below, and a process of the traffic congestion detection method provided in the third embodiment is as shown in Fig. 7, and includes operations 701 to 705.

At operation 701, acquiring vehicle information of each vehicle driving into a detection region of the RSU.

Operation 701 is same as operation 101 in the first embodiment, the relevant implementation details have been described in the first embodiment, and thus are not repeated herein.

At operation 702, counting instantaneous speed information in the vehicle information, screening the instantaneous speed information, and removing abnormal instantaneous speed information.

Specifically, since a driving state of the vehicle in the road section has a certain uncertainty, the RUS cannot accurately measure the driving state of the vehicle in the road section only through instantaneous speeds uploaded by the OBU, and therefore data samples of instantaneous speeds are screened, so that the data samples of instantaneous speeds with universality are adopted to calculate an average speed on the road section.

In some examples, based on a hypothesis test of large subsamples, the RSU performs the hypothesis test on speeds reported to the RSU by n vehicles on the road section within a t-th second. The vehicle $V_i$ determines effectiveness of a speed $v_i$ of the vehicle $V_i$ according to an average speed of other vehicles on the road section within the t-th second, and then following null hypothesis and alternative hypothesis schemes are proposed:

$H_0 : v = v_i$, no significant difference exists;

$H_1 : v \neq v_i$, there is a significant difference.

In above formulas, $v$ represents an actual driving speed of the vehicle $V_i$, $v_i$ represents a detection value of driving speed of the vehicle $V_i$, "no significant difference exists" represents that there is no significant difference between the actual driving speed and the detection value of driving speed, while "there is a significant difference" indicates that there is a significant difference between the actual driving speed and the detection value of driving speed.

On the road section, except for the vehicle $V_i$, if speeds reported by other (n-1) vehicles include $v_1,...v_{i-1}, v_{i+1}...v_{n-1}$, according to a central limit theorem and a hypothesis test based on large subsamples, it is known that there are many vehicles on the road section, that is, a value of n is large, and a statistic $v$ approximately follows a standard

$$v = \frac{\overline{v} - v_i}{\frac{s}{\sqrt{n}}}$$

normal distribution, a formula of calculating $v$ is as follow: , s and $\overline{v}$ are respectively a standard deviation and an average value of the speeds reported by other (n-1) vehicles on the road section, $v_i$ is a speed reported by the vehicle $V_i$.

Given a significance level $\alpha$, there is a $\mu_{\frac{\alpha}{2}}$ making that: $\rho\left\{|v| \geq \mu_{\frac{\alpha}{2}}\right\} \approx \alpha$ , i.e.,

$$\rho\left\{\left|v = \frac{\overline{v} - v_i}{\frac{s}{\sqrt{n}}}\right| \geq \mu_{\frac{\alpha}{2}}\right\} \approx \alpha$$

The RSU obtains values of subsamples $v_1, v_2, v_3,...v_{n-1}$ of speeds of (n-1) vehicles on a certain road section.

Values of s and $\overline{v}$ are calculated, and if: $\left|\overline{v} - v_i\right| \geq \mu_{\frac{\alpha}{2}} \frac{s}{\sqrt{n}}$ , and then the hypothesis $H_0$ is rejected, and $H_1$ is accepted, i.e., there is a significant difference between the actual speed $v$ and $v_i$, the speed $v_i$ detected by the vehicle is regarded

$$\left|\overline{v} - v_i\right| < \mu_{\frac{\alpha}{2}} \frac{s}{\sqrt{n}}$$

as invalid and then rounded down. If , and then the hypothesis $H_0$ is accepted, and $H_1$ is rejected, i.e., there is no significant difference between the actual speed $v$ and $v_i$, the speed $v_i$ detected by the vehicle is regarded as valid, and a confidence probability is $1-\alpha$, $\alpha = 1$ is selected in the example. By performing the hypothesis test on n vehicles on the road section, data representing the speed too fast or too slow in the second may be removed. The removed data may reflect the vehicle that is choosing a parking space on the roadside or is speeding other vehicles.

At operation 703, calculating a first congestion index according to screened vehicle information.

At operation 704, acquiring a plurality of the first congestion indexes uploaded by RSUs in a target region.

At operation 705, calculating a second congestion index according to the plurality of the first congestion indexes.

Operations 703 to 705 are similar to operations 102 to 104 in the first embodiment, and the relevant implementation details have been described in the first embodiment, and thus are not repeated herein.

According to the traffic congestion detection method provided in the embodiment, after speed data uploaded by the OBU is obtained, the data is screened to obtain the instantaneous speed data of the vehicle with a high confidence degree, so that the calculated congestion index is more accurate, and the traffic congestion condition in the region can be more accurately measured.

It should be understood by those skilled in the art that a division between operations of the above method is only for a purpose of clear description, during implementing the method, the operations may be combined into one operation or some operations each may be further split into several operations, which are within the protection scope of the present application, as long as the same logical relationship is included; unnecessary modifications or designs being added or introduced into the algorithm or process, without changing the core design of the algorithm and process is within the protection scope of the present application.

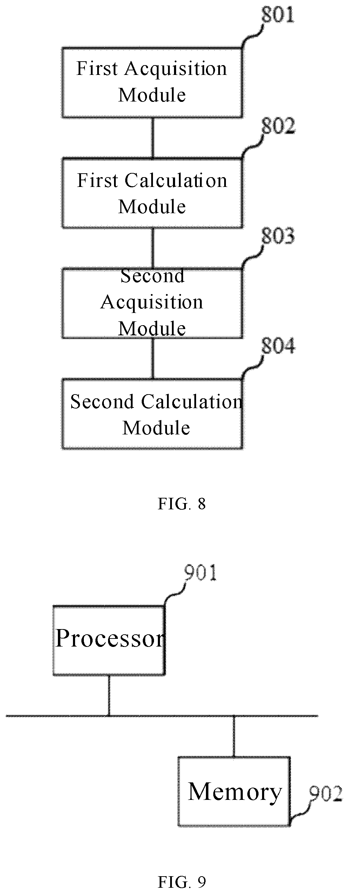

A fourth embodiment of the present application relates to a traffic congestion detection apparatus, configured as shown in Fig. 8, including: a first acquisition module 801, a first calculation module 802, a second acquisition module 803, and a second calculation module 804.

The first acquisition module 801 is configured to acquire vehicle information of each vehicle driving into a detection region of a roadside unit (RSU).

The first calculation module 802 is configured to calculate a first congestion index according to the vehicle information, with the first congestion index representing a traffic congestion condition in the detection region of the RSU.

The second acquisition module 803 is configured to acquire a plurality of the first congestion indexes of RSUs in a target region, with the target region including a plurality of detection regions of the RSUs.

The second calculation module 804 is configured to calculate a second congestion index according to the plurality of the first congestion indexes, with the second congestion index representing a traffic congestion condition of the target region.

In some examples, the first calculation module 802 is configured to determine a road section covered within the detection region of the RSU; determine an average speed and an average density on the road section covered within the detection region of the RSU according to the speed information and location information of each vehicle; and determine the first congestion index according to the average speed and the average density on the road section.

In some examples, the first acquisition module 801 is further configured to perform hypothesis testing on the instantaneous speed information by adopting a large subsample test, and determining whether there is a significant difference between the instantaneous speed and an actual driving speed according to a test threshold, the actual driving speed being obtained by calculating an average value of all instantaneous speeds except an instantaneous speed of a target vehicle, and the test threshold being obtained by calculating according to a standard deviation of all instantaneous speeds except the instantaneous speed of the target vehicle; and remove the instantaneous speed, as abnormal data, being obviously different from the actual driving speed.

In some examples, the second acquisition module 803 is further configured to, in response to that the RSU is determined as a data fusion center by an intelligent traffic system, acquire a plurality of first congestion indexes uploaded by RSUs in the target region. The data fusion center determined by: acquiring weight coefficients of road sections in the target region, with the weight coefficient of a main road being higher than that of an auxiliary road; establishing a correlation coefficient matrix according to the weight coefficients of the road sections, with a value of an element in the matrix representing a degree that the road section represented by a row where the element is located is supported by the road section represented by a column where the element is located, and a sum of values of all elements of each row in the matrix representing a central location of the road section corresponding to the row in the target region; selecting the RSU on the road section corresponding to the row with a highest sum of values of all elements as the data fusion center.

In some examples, the second calculation module 804 is configured to calculate discount coefficients of road sections in the target region, with each discount coefficient reflecting a degree that a congestion index of the corresponding road section is supported by congestion indexes of other road sections in the target region; calculate an average congestion index of the road sections in the target region according to the discount coefficients; perform self-fusion on the average congestion index according to an evidence combination rule to obtain a basic probability allocation function; and convert the basic probability allocation function into a probability distribution, and determine the second congestion index according to the probability distribution.

It should be noted that, each module related in the embodiment is a logic module, and in practical applications, each logic component may be one physical component, or may be a part of one physical component, or may be implemented by a combination of multiple physical components. In addition, in order to emphasize the innovative part of the present application, some components being less closely related to solving the technical problem proposed by the present application is not introduced in the embodiment, which does not indicate that there is not any other component in the embodiment.

A fifth embodiment of the present application relates to an electronic device, and as shown in Fig. 9, the electronic device includes: at least one processor 901; and a memory 902 communicatively connected with the at least one processor 901; the memory 902 stores instructions to be executed by the at least one processor 901, the instructions, executed by the at least one processor 901, cause the at least one processor 901 to perform the traffic congestion detection method described in any of the first, second and third embodiments. The memory 902 and processor 901 are connected through a bus, the bus may include any number of interconnected buses and bridges, and connects various circuits of the at least one processor 901 and the memory 902 together. The bus may further connect together various circuits of peripherals, voltage regulators, power management circuits, and the like, which are well known in the art, and thus are not repeated here. A bus interface provides an interface between the bus and a transceiver. The transceiver may be one element or a plurality of elements, such as a plurality of receivers and transmitters, providing a means for communicating with various other apparatuses over a transmission medium. Data processed by the processor 901 is transmitted over a wireless medium through an antenna, and the antenna further receives data and transmits the data to the processor 901. The processor 901 manages the bus, performs general processing, and may further provide various functions including timing, peripheral interfaces, voltage regulation, power management, and other control functions. The memory 902 may be used to store data used by the processor 901 in performing operations.

A sixth embodiment of the present application further provides a computer-readable storage medium having a computer program stored thereon. The computer program, executed by a processor, causes the processor to implement the traffic congestion detection method in any embodiment described above. It should be understood, by those skilled in the art, that all or part of the operations in the method in any embodiment described above may be implemented by a program instructing related hardware, the program is stored in a storage medium and includes several instructions for causing a device (which may be a single-chip computer, a chip, or the like) or a processor to execute all or part of operations of the method provided in any embodiment of the present application. The aforementioned storage medium includes a U-disk, a read-only memory (ROM), a random access memory (RAM), a removable hard disk, a magnetic disk, an optical disk, or various medium capable of storing program codes. It should be understood by those skilled in the art that the above embodiments are examples of embodiments of the present application, and in practical applications, various changes in form and details may be made without departing from the scope and spirit of the present application.

**Claims**

1. A traffic congestion detection method, applied to a roadside unit (RSU), comprising:

   acquiring vehicle information of each vehicle driving into a detection region of the RSU;
   calculating a first congestion index according to the vehicle information, with the first congestion index representing a traffic congestion condition in the detection region of the RSU;
   acquiring a plurality of first congestion indexes of RSUs in a target region, with the target region comprising a plurality of detection regions of the RSUs; and
   calculating a second congestion index according to the plurality of first congestion indexes, with the second congestion index representing a traffic congestion condition of the target region.

2. The traffic congestion detection method according to claim 1, wherein the vehicle information comprises at least one of: speed information or location information;
   the calculating a first congestion index according to the vehicle information comprises:

   determining a road section covered within the detection region of the RSU;
   determining an average speed and an average density on the road section covered within the detection region of the RSU according to the speed information and location information of the each vehicle; and
   determining the first congestion index according to the average speed and the average density on the road section.

3. The traffic congestion detection method according to claim 2, wherein the determining the first congestion index according to the average speed and the average density on the road section comprises:

determining a basic probability allocation function corresponding to the average speed and the average density on the road section based on a DS evidence theory and a fuzzy set theory; and
fusing by adopting an evidence combination rule according to the basic probability allocation function to obtain the first congestion index.

4. The traffic congestion detection method according to claim 2, wherein the speed information comprises instantaneous speed information of the vehicle;
before determining the average speed and the average density on the road section covered within the detection region of the RSU according to the speed information and the location information of the each vehicle, the method further comprises:

performing hypothesis testing on the instantaneous speed information by adopting a large subsample test, and determining whether there is a significant difference between the instantaneous speed and an actual driving speed according to a test threshold, with the actual driving speed being obtained by calculating an average value of all instantaneous speeds except an instantaneous speed of a target vehicle, and the test threshold being obtained by calculating according to a standard deviation of all instantaneous speeds except the instantaneous speed of the target vehicle; and
removing the instantaneous speed, as abnormal data, being obviously different from the actual driving speed.

5. The traffic congestion detection method according to any one of claims 1 to 4, wherein the acquiring a plurality of first congestion indexes of RSUs in a target region comprises:
in response to that a data fusion center is determined by an intelligent traffic system, acquiring the plurality of first congestion indexes uploaded by the RSUs in the target region.

6. The traffic congestion detection method according to claim 5, wherein the data fusion center is determined by:

acquiring weight coefficients of road sections in the target region, with the weight coefficient of a main road being higher than the weight coefficient of an auxiliary road;
establishing a correlation coefficient matrix according to the weight coefficients of the road sections, with a value of an element in the matrix representing a degree that the road section represented by a row, where the element is located, is supported by the road section represented by a column, where the element is located, and a sum of values of all elements of each row in the matrix representing a central location of the road section corresponding to the row in the target region;
selecting the RSU on the road section corresponding to the row with a highest sum of values of all elements as the data fusion center.

7. The traffic congestion detection method according to claims 1 to 6, wherein the calculating a second congestion index according to the plurality of first congestion indexes comprises:

calculating discount coefficients of road sections in the target region, with each discount coefficient reflecting a degree that a congestion index of the road section corresponding to the discount coefficient is supported by congestion indexes of other road sections in the target region;
calculating an average congestion index of the road sections in the target region according to the discount coefficients;
performing self-fusion on the average congestion index according to an evidence combination rule to obtain a basic probability allocation function; and
converting the basic probability allocation function into a probability distribution, and determining the second congestion index according to the probability distribution.

8. A traffic congestion detection apparatus, comprising:

a first acquisition module configured to acquire vehicle information of each vehicle driving into a detection region of a roadside unit (RSU);

a first calculation module configured to calculate a first congestion index according to the vehicle information, with the first congestion index representing a traffic congestion condition in the detection region of the RSU;

a second acquisition module configured to acquire a plurality of first congestion indexes of RSUs in a target region, with the target region comprising a plurality of detection regions of the RSUs; and

a second calculation module configured to calculate a second congestion index according to the plurality of first congestion indexes, with the second congestion index representing a traffic congestion condition of the target region.

9. An electronic device, comprising:

at least one processor; and
a memory communicatively connected with the at least one processor, wherein
the memory stores instructions to be executed by the at least one processor, the instructions, executed by the at least one processor, cause the at least one processor to perform the method of any one of claims 1 to7.

10. A computer-readable storage medium storing a computer program, the computer program, executed by a processor, causes the processor to perform the method of any one of claims 1 to 7.

Start

↓ 101

Acquiring vehicle information of each vehicle driving into a detection region of the RSU;

↓ 102

Calculating a first congestion index according to the vehicle information

↓ 103

Acquiring a plurality of first congestion indexes of RSUs in a target region

↓ 104

Calculating a second congestion index according to the plurality of first congestion indexes.

↓

End

FIG. 1

FIG. 2

Start

Calculating an average speed and an average density on a road section within a detection region of a RSU
301

Generating a basic probability allocation function related to the average speed and the average density on the road section based on a DS evidence theory and a fuzzy set theory
302

Fusing average speeds and average densities of road sections in the detection region by adopting an evidence combination rule to obtain the first congestion index
303

End

FIG. 3

Speed-Congestion Index
Membership Function

Membership degree of Speed

IV    III    II    I

Average Speed of Vehicle (km/h)

FIG. 4

FIG. 5

Start

The intelligent traffic system determines weight coefficients of road sections according to the road network structure, and establishes an evidence correlation coefficient matrix SM — 601

The intelligent traffic system determines a data fusion center according to the evidence correlation coefficient matrix SM — 602

Calculating a discount coefficient of the basic probability allocation function of each road section — 603

Calculating an average congestion index of the road sections by using the discount coefficients — 604

Performing self-fusion on the average congestion index according to the evidence combination rule to obtain the basic probability allocation function — 605

Converting the basic probability allocation function into a probability distribution, and taking a proposition with a highest value as the second congestion index — 606

End

FIG. 6

FIG. 7

801

First Acquisition
Module

802

First Calculation
Module

803

Second
Acquisition
Module

804

Second Calculation
Module

FIG. 8

901

Processor

Memory 902

FIG. 9

## INTERNATIONAL SEARCH REPORT

| | |
|---|---|
| | International application No. |
| | **PCT/CN2022/070351** |

**A.    CLASSIFICATION OF SUBJECT MATTER**

G08G 1/01(2006.01)i

According to International Patent Classification (IPC) or to both national classification and IPC

**B.    FIELDS SEARCHED**

Minimum documentation searched (classification system followed by classification symbols)

G08G

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; GBTXT; CNKI; Web of Science: 交通, 拥堵, 堵塞, 堵车, 指数, 系数, 比例, 路侧, 路测, 权重, 第二, 车联网, 速度, 密度, 流量, traffic, jam, index, coefficient, ratio, RSU, DSRC, V2I, V2X, second, weight, velocity, density, flow

**C.    DOCUMENTS CONSIDERED TO BE RELEVANT**

| Category* | Citation of document, with indication, where appropriate, of the relevant passages | Relevant to claim No. |
|---|---|---|
| PX | CN 112382098 A (ZTE CORPORATION et al.) 19 February 2021 (2021-02-19) description, paragraphs 4-77, and figures 1-9 | 1-10 |
| Y | CN 111081019 A (SOUTH CHINA UNIVERSITY OF TECHNOLOGY) 28 April 2020 (2020-04-28) description, paragraphs 6-66, and figures 1-2 | 1-10 |
| Y | CN 106023626 A (LAUNCH TECH. CO., LTD.) 12 October 2016 (2016-10-12) description, paragraphs 3-165, and figures 1-7 | 1-10 |
| Y | CN 108765939 A (GUIYANG INFORMATION TECHNOLOGY INSTITUTE; INSTITUTE OF SOFTWARE, CHINESE ACADEMY OF SCIENCES et al.) 06 November 2018 (2018-11-06) description, paragraphs 6-78, and figures 1-3 | 1-10 |
| Y | CN 105023434 A (XINRONGYUAN BIG DATA TECHNOLOGY (BEIJING) CO., LTD. et al.) 04 November 2015 (2015-11-04) description, paragraphs 15-144, and figures 1-5 | 1-10 |
| A | CN 107622309 A (CHANG'AN UNIVERSITY) 23 January 2018 (2018-01-23) entire document | 1-10 |

☑ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **21 February 2022** | **10 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/070351** |

**C.    DOCUMENTS CONSIDERED TO BE RELEVANT**

| Category* | Citation of document, with indication, where appropriate, of the relevant passages | Relevant to claim No. |
|---|---|---|
| A | CN 111489548 A (GUANGDONG ZHONGKE ZHENHENG INFORMATION TECHNOLOGY CO., LTD.) 04 August 2020 (2020-08-04)<br>entire document | 1-10 |
| A | KR 101615970 B1 (KOREA INST CIVIL ENGINEERING & BUILDING TECHNOLOGY) 28 April 2016 (2016-04-28)<br>entire document | 1-10 |
| A | US 2019392712 A1 (CAVH LLC) 26 December 2019 (2019-12-26)<br>entire document | 1-10 |
| A | JP 2010009366 A (IHI CORP. et al.) 14 January 2010 (2010-01-14)<br>entire document | 1-10 |
| A | CN 105303850 A (BEIJING GOLDENTEAM TECHNOLOGY CO., LTD.) 03 February 2016 (2016-02-03)<br>entire document | 1-10 |
| A | CN 103761876 A (SHANDONG UNIVERSITY) 30 April 2014 (2014-04-30)<br>entire document | 1-10 |
| A | CN 108492555 A (QINGDAO HISENSE TRANSTECH CO., LTD.) 04 September 2018 (2018-09-04)<br>entire document | 1-10 |
| A | CN 110570674 A (HANGZHOU BROADXT TECHNOLOGY CO., LTD.) 13 December 2019 (2019-12-13)<br>entire document | 1-10 |
| A | CN 111583641 A (BEIJING DIDI INFINITY TECHNOLOGY AND DEVELOPMENT CO., LTD.) 25 August 2020 (2020-08-25)<br>entire document | 1-10 |

**INTERNATIONAL SEARCH REPORT**
Information on patent family members

International application No.

**PCT/CN2022/070351**

| Patent document cited in search report | | | Publication date (day/month/year) | Patent family member(s) | | | Publication date (day/month/year) |
|---|---|---|---|---|---|---|---|
| CN | 112382098 | A | 19 February 2021 | CN | 112382098 | B | 06 July 2021 |
| CN | 111081019 | A | 28 April 2020 | CN | 111081019 | B | 10 August 2021 |
| CN | 106023626 | A | 12 October 2016 | WO | 2017215181 | A1 | 21 December 2017 |
| CN | 108765939 | A | 06 November 2018 | CN | 108765939 | B | 02 February 2021 |
| CN | 105023434 | A | 04 November 2015 | CN | 105023434 | B | 26 April 2017 |
| CN | 107622309 | A | 23 January 2018 | CN | 107622309 | B | 08 January 2021 |
| CN | 111489548 | A | 04 August 2020 | None | | | |
| KR | 101615970 | B1 | 28 April 2016 | None | | | |
| US | 2019392712 | A1 | 26 December 2019 | WO | 2019246246 | A1 | 26 December 2019 |
| JP | 2010009366 | A | 14 January 2010 | JP | 5162352 | B2 | 13 March 2013 |
| CN | 105303850 | A | 03 February 2016 | CN | 105303850 | B | 18 May 2016 |
| CN | 103761876 | A | 30 April 2014 | CN | 103761876 | B | 02 December 2015 |
| CN | 108492555 | A | 04 September 2018 | CN | 108492555 | B | 31 March 2020 |
| CN | 110570674 | A | 13 December 2019 | None | | | |
| CN | 111583641 | A | 25 August 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110032765